# EUROPÄISCHE PATENTSCHRIFT

(11) **EP 2 031 285 B1**
(45) Veröffentlichungstag und Bekanntmachung des Hinweises auf die Patenterteilung: **19.10.2011**
(21) Anmeldenummer: 08013812.6
(22) Anmeldetag: 01.08.2008
(51) Int. Cl.: F16K 7/20, F16K 31/06

(54) **Ventil mit magnetischem Schaumstoffdichtkörper**
Valve with magnetic foam seal body
Soupape dotée d'un corps d'étanchéité en mousse magnétique

(30) Priorität: 29.08.2007 DE 102007041050
(43) Veröffentlichungstag der Anmeldung: 04.03.2009
(73) Patentinhaber: Actuator Components GmbH & Co. KG, 69469 Weinheim (DE)
(72) Erfinder: Heinrich, Ralf, 67365 Schwegenheim (DE); Gerlich, Thorsten, 64625 Bensheim (DE); Gund, Christoph, 69221 Dossenheim (DE); Bickel, Klaus, 64689 Hammelbach (DE)

(56) Entgegenhaltungen:
- WO-A2-2007/092778
- DE-A1- 10 248 342
- DE-U1- 29 913 326

## Beschreibung

### Technisches Gebiet

Die Erfindung betrifft ein Ventil mit einem Einlass, einem Auslass, einem Dichtkörper und einer Einrichtung zur Erzeugung eines magnetischen Feldes, wobei der Dichtkörper durch die Einrichtung zumindest teilweise beweglich ist, und wobei der Dichtkörper den Einlass und den Auslass fluidleitend verbindet, indem er zumindest teilweise von einem Dichtsitz abhebt.

### Stand der Technik

Aus der DE 299 13 326 U1 ist ein Ventil bekannt, dessen Dichtkörper eine magnetorheologische Flüssigkeit aufweist. Der Dichtkörper ist zylindrisch ausgebildet und aus Kunststoff oder Metall gefertigt. Der zylindrische Dichtkörper nimmt die Flüssigkeit auf und ist zumindest einseitig durch eine Membran begrenzt. Dieses Ventil ist teuer, aufwendig zu fertigen und kann Leckagen aufweisen, aus denen die Flüssigkeit austreten kann.

Die DE 102 48 342 A1 offenbart ein Ventil mit einem Dichtkörper, der gegen die Kraft einer Feder gegen einen Dichtsitz gedrückt wird. Zur Dämpfung von Ventilgeräuschen wird in einem Ringspalt eine Flüssigkeitskammer für eine magnetorheologische Flüssigkeit, einen pastenförmigen Trägerstoff oder einen magnetischen Schaumstoff ausgebildet. Der Dichtkörper selbst ist ein starrer Körper. Der starre Körper kann beim Aufschlagen auf den Dichtsitz Geräusche erzeugen. Des Weiteren ist dieses Ventil aufwendig zu fertigen.

Bei den bekannten Ventilen ist der Dichtkörper als starres Bauteil ausgestaltet, um mit dem magnetischen Feld in Wechselwirkung zu treten. Häufig werden Dichtkörper als Metallteile oder als Metall-Kunststoff-Verbundteile ausgestaltet.

Bei diesen Ventilen ist nachteilig, dass die harten Dichtkörper beim Abheben und emeuten Anschlagen auf den Dichtsitz störende Geräusche erzeugen. Insbesondere bei getakteten Ventilen können stakkatoartige Geräusche auftreten, die insbesondere in Kraftfahrzeuginnenräumen als äußerst unangenehm empfunden werden können.

### Darstellung der Erfindung

Der Erfindung liegt daher die Aufgabe zu Grunde, ein Ventil der eingangs genannten Art zu realisieren, welches bei kostengünstigem Aufbau einen geräuscharmen Betrieb gewährleistet.

Erfindungsgemäß wird die voranstehende Aufgabe mit den Merkmalen des Patentanspruchs 1 gelöst.

Danach ist ein Ventil der eingangs genannten Art dadurch gekennzeichnet, dass der Dichtkörper zumindest teilweise aus einem Schaumstoffkörper gefertigt ist, der durch das Magnetfeld deformierbar ist.

Erfindungsgemäß ist erkannt worden, dass ein Schaumstoffkörper aufgrund seiner Weichheit und Nachgiebigkeit nahezu geräuschlos an einem Dichtsitz anlegbar ist. Ein durch ein Magnetfeld reversibel deformierbarer elastischer Schaumstoffkörper kann durch das Magnetfeld aus einer Ruhelage verbracht werden, in welche der Schaumstoffkörper nach Abschalten des Magnetfelds selbständig zurückkehrt. Hierdurch kann auf relativ teure metallische Federn verzichtet werden. Insbesondere bei einem getakteten Ventil können aufgrund der Weichheit des Schaumstoffkörpers stakkatoartige Geräusche vermieden werden. Bei Verwendung des hier beschriebenen Ventils in einem Kraftfahrzeug treten in dessen Innenraum keine störenden Geräusche auf, die durch das Anschlagen eines Dichtkörpers am Dichtsitz erzeugt werden. Erfindungsgemäß ist weiter erkannt worden, dass ein Schaumstoffkörper kostengünstig gefertigt werden kann, da Schaumstoffe problemlos in beliebigen geometrischen Formen geschäumt werden können. Folglich ist die eingangs genannte Aufgabe gelöst.

Der Dichtkörper könnte als Schaumstoffkörper ausgebildet sein, der durch das Magnetfeld reversibel deformierbar ist. Diese Ausgestaltung erlaubt die Fertigung eines Dichtkörpers allein aus Schaumstoff ohne zusätzliche Bauteile. Die reversible Deformierbarkeit macht Rückstellelemente wie Federn überflüssig. Allein durch Ausschalten des Magnetfelds kehrt der Schaumstoffkörper seine Ruheform zurück.

Vor diesem Hintergrund könnte der Dichtkörper als Schaumstoffkörper ausgebildet sein, der als Einzelteil in ein im Ventil ausgebildetes Lager einsetzbar und aus diesem zerstörungsfrei entnehmbar ist. Diese Ausgestaltung erlaubt, einen schadhaft gewordenen Dichtkörper problemlos auszutauschen.

Der Dichtkörper könnte den Dichtsitz unter Formveränderung des Schaumstoffkörpers freigeben und dadurch den Einlass mit dem Auslass fluidleitend verbinden. Hierdurch ist ein schneller Öffnungsvorgang des Ventils realisierbar, da der Dichtkörper nicht als Ganzes vom Dichsitz abheben muss. Lediglich Bereiche des Dichtkörpers können vom Dichsitz teilweise abheben und Schlitze oder Spalte freigeben, durch die ein Fluid strömen kann.

Der Schaumstoffkörper könnte ein erstes Ende und ein zweites Ende aufweisen, wobei das erste Ende durch Einwirkung des magnetischen Feldes unter Komprimierung des Schaumstoffkörpers gegen das zweite Ende verbringbar ist. Vorteilhaft kann sich der Schaumstoffkörper nach Ausschalten des magnetischen Feldes aufgrund von Rückstellkräften entkomprimieren. Durch das Entkomprimieren wird der Dichtkörper wieder am Dichtsitz angelegt und die Fluidverbindung zwischen Auslass und Einlass wieder verschlossen. Hierdurch wird ein magnetoelastischer Effekt zum Öffnen und Schließen eines Ventils genutzt.

Vor diesem Hintergrund könnte dem Schaumstoffkörper ein Ausweichraum zugeordnet sein. Der Ausweichraum ermöglicht, dass sich durch die Komprimierung des Schaumstoffkörpers auftretende Auswölbungen des Schaumstoffkörpers ohne Widerstand ausbreiten können. Die Vorkehrung eines Ausweichraums erlaubt eine Komprimierung des Schaumstoffkörpers durch relativ geringe Kräfte, da mechanische Widerstände reduziert werden. Dies erlaubt die Realisierung einer relativ großen Hubhöhe des Dichtkörpers, wodurch ein großer Strömungskanal zwischen Einlass und Auslass geschaffen werden kann. Bevorzugt könnte die Hubhöhe etwa 20% der Höhe des Schaumstoffkörpers entsprechen.

Im Schaumstoffkörper könnten ferromagnetische Partikel verteilt sein. Durch diese konkrete Ausgestaltung kann der Schaumstoffkörper durch ein Magnetfeld deformiert werden. Besonders bevorzugt könnten Eisenpartikel verwendet werden, da diese kostengünstig sind.

Die ferromagnetischen Partikel könnten einen mittleren Durchmesser aufweisen, der im Bereich 0,1 µm bis 1 mm liegt. Partikel dieser Größe stören vorteilhafterweise nicht den Aufbau der Schaumstoffmatrix. Die Stege zwischen den Poren des Schaumstoffkörpers werden nahezu nicht in ihrer Stabilität beeinflusst. Besonders bevorzugt könnten Partikel mit einem mittleren Durchmesser von 0,5 bis 10 µm verwendet werden, da diese problemlos in einem schäumfähigen Material dispergiert werden können und im fertigen Schaumstoffkörper besonders homogen verteilt sind. Es hat sich gezeigt, dass sich kleinere Partikel aufgrund ihrer sehr hohen spezifischen Oberfläche nur schwer in das schäumfähige Material einmischen lassen. Größere Partikel führen aufgrund ihres Absetzverhaltens zu inhomogenen Schaumstoffkörpem. Der angegebene besonders bevorzugte Bereich optimiert das Einmischverhalten und die Homogenität des Schaumstoffkörpers.

Die Partikel könnten zwischen 5 und 50 Volumenprozent des Schaumstoffkörpers einnehmen. Dieser Bereich hat sich als besonders vorteilhaft erwiesen, einen hinreichend elastischen Schaumstoffkörper zu schaffen, der zugleich ausreichend auf das Magnetfeld anspricht und sich durch dieses deformieren lässt.

Der Dichtkörper könnte als zylindrischer Schaumstoffkörper ausgebildet sein, dessen dem Dichtsitz zugewandtes Ende eine Dichtung aufweist. Durch diese konkrete Ausgestaltung kann das Lager für den Dichtkörper problemlos rotationssymmetrisch gefertigt werden. Der Dichtkörper kann in das Lager eingeklemmt und dadurch in einer Ruheposition fixiert werden, in der er auf dem Dichtsitz ruht. Die Ausbildung einer Dichtung erlaubt eine zuverlässige fluiddichte Trennung des Einlasses vom Auslass. Die Dichtung könnte als Folie ausgestaltet sein. Eine solche Dichtung zeigt ein geringes Gewicht und ist aufgrund ihrer geringen Dicke problemlos zusammen mit dem Schaumstoffkörper deformierbar, um teilweise vom Dichtsitz abzuheben.

Der Schaumstoffkörper könnte Poren mit einem Durchmesser im Bereich 10 µm bis 0,5 mm zeigen. Diese Porengröße hat sich als vorteilhaft erwiesen, um eine hohe Dichtwirkung zu erzielen. Dabei können offenzellige oder geschlossenzellige Schäume eingesetzt werden. Bei offenzelligen Schäumen stehen zumindest ein Teil der einzelnen Poren miteinander in Kontakt. Bei geschlossenzelligen Schäumen liegen alle Poren voneinander isoliert in der Polymermatrix vor. Geschlossenzellige Schäume eignen sich besonders für die Verwendung in einem Ventil, da die abzudichtenden Fluide nicht durch den Schaumstoffkörper hindurchdringen können. Dabei ist denkbar, dass der Schaumstoffkörper und die Dichtung einstückig, nämlich als ein Bauteil ausgebildet sind. Das dem Dichtsitz zugewandte Ende des Schaumstoffkörpers könnte eine höhere Dichte und feinere Porosität als der Rest des Schaumstoffkörpers aufweisen, um eine hohe Dichtheit zu erzielen.

Der Schaumstoffkörper könnte einen Porenanteil von mindestens 5 Volumenprozent zeigen, um durch relativ schwache magnetische Felder problemlos deformierbar zu sein.

Die Einrichtung zur Erzeugung eines magnetischen Feldes könnte eine Spule umfassen. Hierdurch wird eine Elektromagnet geschaffen, der eine rasche Taktung des Ventils ermöglicht.

Vor diesem Hintergrund könnte der Dichtkörper bei einer magnetischen Flussdichte von 0,5 bis 2 Tesla bewegbar sein. Vorteilhaft lässt sich der Dichtkörper durch relativ geringe Ströme zumindest teilweise bewegen.

Vor diesem Hintergrund ist denkbar, dass als Schaumstoffkörper Elastomerschäume verwendet werden, die aus thermoplastischen Elastomeren bestehen. Im Sinne dieser Anmeldung werden unter Elastomerschäumen poröse Kunststoffe verstanden, die ein gummielastisches Verhalten aufweisen. Dabei kann es sich um weitmaschig chemisch oder physikalisch vernetzte Polymere handeln, die sich unter ihrem Glaspunkt stahlelastisch verhalten und die bei Temperaturen oberhalb ihres Glaspunktes gummielastisch sind. Glastemperaturen von bevorzugt eingesetzten Elastomeren liegen bei 20°C und darunter.

Bevorzugt verhalten sich die eingesetzten Elastomerschäume bis zu ihrer Schmelz- oder Zersetzungstemperatur gummielastisch. Bevorzugt eingesetzte thermoplastische Elastomere sind thermoplastische Polyester, thermoplastische Polyamide, unvernetzte thermoplastische Polyolefine, teilvemetzte thermoplastische Polyolefine, thermoplastische Styrolpolymere und insbesondere thermoplastische Polyurethane.

Der Schaumstoffkörper könnte aus einem Schaumstoff aus Ethylvinylacetat bestehen. Ein Schaumstoff aus diesem Material hat sich als besonders geeignet erwiesen, ferromagnetische Partikel in homogener Verteilung aufzunehmen.

Das hier beschriebene Ventil könnte mehrere Einlässe aufweisen. Diese Ausgestaltung eignet das Ventil zur Verwendung als Umschaltventil, bei dem zwei oder mehrere Einlässe wahlweise fluidleitend mit dem Auslass verbunden werden können.

Das hier beschriebene Ventil eignet sich besonders zur Verwendung als Regenerierventil in Kraftfahrzeugen, da es nahezu lautlos arbeitet und mit geringen Strömen mit einer hohen Frequenz getaktet werden kann.

Über die Tankentlüftung eines Kraftfahrzeugs können ab einer bestimmten Temperatur leichtflüchtige Kohlenwasserstoffe in die Atmosphäre gelangen. In der Euro-2-Norm ist diese Emission auf einen bestimmten Grenzwert gesetzt worden. Um diesen einzuhalten, wird ein Aktivkohlefilter in die Tankentlüftung eingebaut. Dieser absorbiert die entwichenen Kohlenwasserstoffe und lässt nur reine Luft in die Atmosphäre entweichen. Ein Regenerierventil wird zwischen dem Aktivkohlefilter und dem Ansaugrohr des Motors platziert. Das Ventil öffnet unter bestimmten Voraussetzungen und ermöglicht eine Regeneration des Aktivkohlefilters. Die Kraftstoffdämpfe werden über das Regenerierventil in das Ansaugrohr gesaugt, gelangen dann in den Verbrennungsraum der Zylinder und werden dort verbrannt.

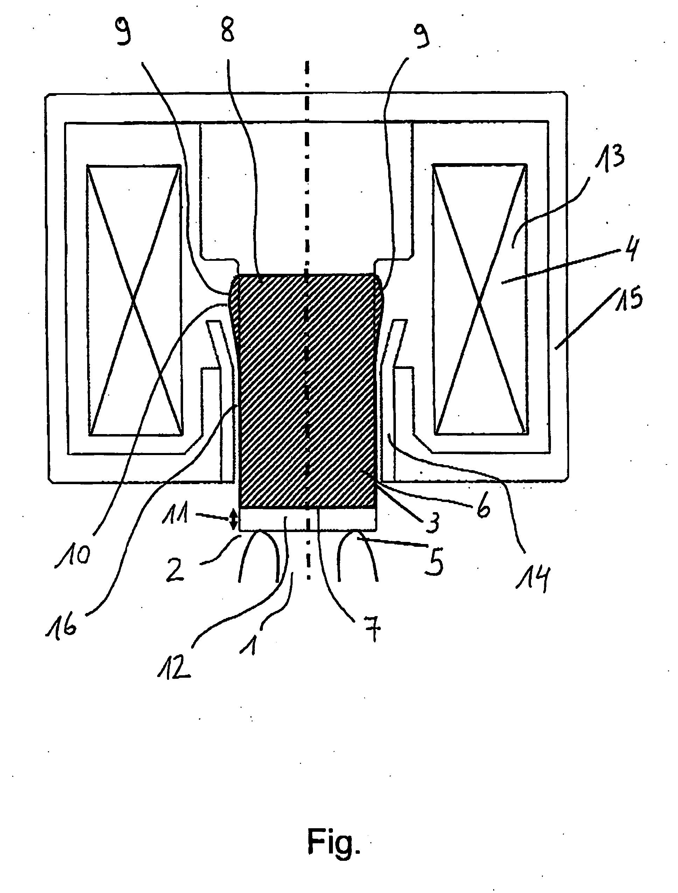

Es gibt nun verschiedene Möglichkeiten, die Lehre der vorliegenden Erfindung auf vorteilhafte Weise auszugestalten und weiterzubilden. Dazu ist einerseits auf die nachgeordneten Ansprüche, andererseits auf die nachfolgende Erläuterung eines bevorzugten Ausführungsbeispiels der Erfindung anhand der Zeichnung zu verweisen.

In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

### Kurzbeschreibung der Zeichnung

In der Zeichnung zeigt die einzige
- Fig.: eine schematische Schnittansicht eines Ventils mit einem Dichtkörper mit einem Schaumstoffkörper, der durch Deformierung von einem Dichtsitz abheben kann.

### Ausführung der Erfindung

Die einzige Fig. zeigt ein Ventil mit einem Einlass 1, einem Auslass 2, einem Dichtkörper 3 und einer Einrichtung 4 zur Erzeugung eines magnetischen Feldes, wobei der Dichtkörper 3 durch die Einrichtung 4 zumindest teilweise beweglich ist, und wobei der Dichtkörper 3 den Einlass 1 und den Auslass 2 fluidleitend verbindet, indem er zumindest teilweise von einem Dichtsitz 5 abhebt. Der Dichtkörper 3 ist zumindest teilweise aus einem Schaumstoffkörper 6 gefertigt.

Dichtkörper 3 gibt den Dichtsitz 5 unter Formveränderung des Schaumstoffkörpers 6 frei und verbindet dadurch den Einlass 1 mit dem Auslass 2 fluidleitend. Der Schaumstoffkörper 6 weist ein erstes Ende 7 und ein zweites Ende 8 auf, wobei das erste Ende 7 durch Einwirkung des magnetischen Feldes unter Komprimierung des Schaumstoffkörpers 6 gegen das zweite Ende 8 verbringbar ist. Bei der Komprimierung bilden sich Auswölbungen 9 des Schaumstoffkörper 6, die in einen Ausweichraum 10 eindringen können. Hierdurch kann der Dichtkörper 3 problemlos einen Hub 11 ausführen, um vom Dichtsitz 5 abzuheben.

Der Schaumstoffkörper 6 ist zylindrisch ausgebildet und in einem Lager 16 umfänglich geführt. Hierdurch kann sich der Dichtkörper 3 nicht als Ganzes, sondern nur teilweise, nämlich durch Komprimierung bewegen.

Im Schaumstoffkörper 6 sind ferromagnetische Partikel, nämlich Eisenpartikel verteilt. Die ferromagnetischen Partikel weisen einen mittleren Durchmesser auf, der im Bereich 0,1 µm bis 1 mm liegt. Die Partikel nehmen zwischen 5 und 50 Volumenprozent des Schaumstoffkörpers 6 ein. Durch die ferromagnetischen Partikel kann der Schaumstoffkörper 6 mit einem Magnetfeld in Wechselwirkung treten und deformiert werden.

Der Dichtkörper 3 ist als zylindrischer Schaumstoffkörper 6 ausgebildet, dessen dem Dichtsitz 5 zugewandtes Ende 7 eine Dichtung 12 aufweist.

Der Schaumstoffkörper 6 zeigt Porendurchmesser im Bereich 10 µm bis 0,5 mm. Der Schaumstoffkörper 6 zeigt einen Porenanteil von mindestens 5 Volumenprozent.

Die Einrichtung 4 zur Erzeugung eines magnetischen Feldes umfasst eine Spule 13, die eine weichmagnetische Hülse 14 konzentrisch umgibt. Die Spule 13 ist von einem Gehäuse 15 umgeben, welches die magnetischen Feldlinien führt. Der Dichtkörper 3 ist bei einer magnetischen Flussdichte von 0,5 bis 2 Tesla bewegbar.

Der Dichtkörper 3 ist als Schaumstoffkörper 6 ausgebildet, der durch das Magnetfeld reversibel deformierbar ist. Der Dichtkörper 3 ist als Schaumstoffkörper 6 ausgebildet, der als Einzelteil in das im Ventil ausgebildete Lager 16 einsetzbar und aus diesem zerstörungsfrei entnehmbar ist.

Hinsichtlich weiterer vorteilhafter Ausgestaltungen und Weiterbildungen der erfindungsgemäßen Lehre wird einerseits auf den allgemeinen Teil der Beschreibung und andererseits auf die Patentansprüche verwiesen.

Abschließend sei ganz besonders hervorgehoben, dass das zuvor rein willkürlich ausgewählte Ausführungsbeispiel lediglich zur Erörterung der erfindungsgemäßen Lehre dient, dieses jedoch nicht auf dieses Ausführungsbeispiel einschränkt.

## Patentansprüche

1. Ventil mit einem Einlass (1), einem Auslass (2), einem Dichtkörper (3) und einer Einrichtung (4) zur Erzeugung eines magnetischen Feldes, wobei der Dichtkörper (3) durch die Einrichtung (4) zumindest teilweise beweglich ist, und wobei der Dichtkörper (3) den Einlass (1) und den Auslass (2) fluidleitend verbindet, indem er zumindest teilweise von einem Dichtsitz (5) abhebt,
**dadurch gekennzeichnet, dass** der Dichtkörper (3) zumindest teilweise aus einem Schaumstoffkörper (6) gefertigt ist, der durch das Magnetfeld deformierbar ist.

2. Ventil nach Anspruch 1, **dadurch gekennzeichnet, dass** der Dichtkörper (3) als Schaumstoffkörper (6) ausgebildet ist, der durch das Magnetfeld reversibel deformierbar ist.

3. Ventil nach Anspruch 1 oder 2; **dadurch gekennzeichnet, dass** der Dichtkörper (3) als Schaumstoffkörper (6) ausgebildet ist, der als. Einzelteil in ein im Ventil ausgebildetes Lager (16) einsetzbar und aus diesem zerstörungsfrei entnehmbar ist.

4. Ventil nach einem der Ansprüche 1 bis 3, **dadurch gekennzeichnet, dass** der Dichtkörper (3) den Dichtsitz (5) unter Formveränderung des Schaumstoffkörpers (6) freigibt und dadurch den Einlass (1) mit dem Auslass (2) fluidleitend verbindet,

5. Ventil nach einem der Ansprüche 1 bis 4, **dadurch gekennzeichnet, dass** der Schaumstoffkörper (6) ein erstes Ende (7) und ein zweites Ende (8) aufweist, wobei das erste Ende (7) durch Einwirkung des magnetischen Feldes unter Komprimierung des Schaumstoffkörpers (6) gegen das zweite Ende (8) verbringbar ist.

6. Ventil nach einem der Ansprüche 1 bis 5, **dadurch gekennzeichnet, dass** dem Schaumstoffkörper (6) ein Ausweichraum (10) zugeordnet ist

7. Ventil nach einem der Ansprüche 1 bis 6, **dadurch gekennzeichnet, dass** im Schaumstoffkörper (6) ferromagnetische Partikel verteilt sind.

8. Ventil nach Anspruch 7, **dadurch gekennzeichnet, dass** die ferromagnetischen Partikel einen mittleren Durchmesser aufweisen, der im Bereich 0,1 µm bis 1 mm liegt.

9. Ventil nach Anspruch 7 oder 8, **dadurch gekennzeichnet, dass** die Partikel zwischen 5 und 50 Volumenprozent des Schaumstoffkörpers (6) einnehmen.

10. Ventil nach einem der Ansprüche 1 bis 9, **dadurch gekennzeichnet, dass** der Dichtkörper (3) als zylindrischer Schaumstoffkörper (6) ausgebildet ist, dessen dem Dichtsitz (5) zugewandtes Ende (7) eine Dichtung (12) aufweist.

11. Ventil nach einem der Ansprüche 1 bis 10, **dadurch gekennzeichnet, dass** der Schaumstoffkörper (6) Poren mit einem Durchmesser im Bereich 10 µm bis 0,5 mm zeigt.

12. Ventil nach einem der Ansprüche 1 bis 11, **dadurch gekennzeichnet, dass** der Schaumstoffkörper (6) einen Porenanteil von mindestens 5 Volumenprozent zeigt.

13. Ventil nach einem der Ansprüche 1 bis 12, **dadurch gekennzeichnet, dass** die Einrichtung (4) zur Erzeugung eines magnetischen Feldes eine Spule (13) umfasst.

14. Ventil nach einem der Ansprüche 1 bis 13, **dadurch gekennzeichnet, dass** der Dichtkörper (3) bei einer magnetischen Flussdichte von 0,5 bis 2 Tesla bewegbar ist und einen Hub (11) ausführt.

## Claims

1. Valve having an inlet (1), an outlet (2), a sealing body (3) and a device (4) for generating a magnetic field, the sealing body (3) being movable at least partially by the device (4), and the sealing body (3) connecting the inlet (1) and the outlet (2) in a fluid-conducting manner by rising up at least partially from a sealing seat (5), **characterized in that** the sealing body (3) is produced at least partially from a foam body (6) which can be deformed by the magnetic field.

2. Valve according to Claim 1, **characterized in that** the sealing body (3) is configured as a foam body (6) which can be deformed reversibly by the magnetic field.

3. Valve according to Claim 1 or 2, **characterized in that** the sealing body (3) is configured as a foam body (6) which can be inserted as an individual part into a bearing (16) formed in the valve and can be removed from the latter without destruction.

4. Valve according to one of Claims 1 to 3, **characterized in that** the sealing body (3) opens the sealing seat (5) with a shape change of the foam body (6) and, as a result, connects the inlet (1) to the outlet (2) in a fluid-conducting manner.

5. Valve according to one of Claims 1 to 4, **characterized in that** the foam body (6) has a first end (7) and a second end (8), it being possible for the first end (7) to be moved against the second end (8) by the action of the magnetic field with compression of the foam body (6).

6. Valve according to one of Claims 1 to 5, **characterized in that** the foam body (6) is assigned a deflecting space (10).

7. Valve according to one of Claims 1 to 6, **characterized in that** ferromagnetic particles are distributed in the foam body (6).

8. Valve according to Claim 7, **characterized in that** the ferromagnetic particles have a mean diameter which lies in the range from 0.1 µm to 1 mm.

9. Valve according to Claim 7 or 8, **characterized in that** the particles take up between 5 and 50 per cent by volume of the foam body (6).

10. Valve according to one of Claims 1 to 9, **characterized in that** the sealing body (3) is configured as a cylindrical foam body (6), the end (7) of which, which faces the sealing seat (5), has a seal (12).

11. Valve according to one of Claims 1 to 10, **characterized in that** the foam body (6) exhibits pores with a diameter in the range from 10 µm to 0.5 mm.

12. Valve according to one of Claims 1 to 11, **characterized in that** the foam body (6) has a pore proportion of at least 5 per cent by volume.

13. Valve according to one of Claims 1 to 12, **characterized in that** the device (4) for generating a magnetic field comprises a coil (13).

14. Valve according to one of Claims 1 to 13, **characterized in that** the sealing body (3) can be moved in the case of a magnetic flux density of from 0.5 to 2 tesla, and carries out a lifting operation (11).

## Revendications

1. Soupape comprenant une entrée (1), une sortie (2), un corps d'étanchéité (3) et un dispositif (4) pour produire un champ magnétique, le corps d'étanchéité (3) pouvant être déplacé au moins en partie par le dispositif (4), et le corps d'étanchéité (3) reliant fluidiquement l'entrée (1) et la sortie (2), en se soulevant au moins en partie d'un siège d'étanchéité (5),
**caractérisée en ce que** le corps d'étanchéité (3) est fabriqué au moins en partie en un corps en mousse (6) qui peut être déformé par le champ magnétique.

2. Soupape selon la revendication 1, **caractérisée en ce que** le corps d'étanchéité (3) est réalisé sous forme de corps en mousse (6) qui peut être déformé de manière réversible par le champ magnétique.

3. Soupape selon la revendication 1 ou 2, **caractérisée en ce que** le corps d'étanchéité (3) est réalisé sous forme de corps en mousse (6) qui peut être inséré en tant que pièce séparée dans un palier (16) réalisé dans la soupape et qui peut en être retiré sans destruction.

4. soupape selon l'une quelconque des revendications 1 à 3, **caractérisée en ce que** le corps d'étanchéité (3) libère le siège d'étanchéité (5) en modifiant la forme du corps en mousse (6) et relie de ce fait fluidiquement l'entrée (1) à la sortie (2).

5. Soupape selon l'une quelconque des revendications 1 à 4, **caractérisée en ce que** le corps en mousse (6) présente une première extrémité (7) et une deuxième extrémité (8), la première extrémité (7) pouvant être amenée sous l'action du champ magnétique contre la deuxième extrémité (8) par compression du corps en mousse (6).

6. Soupape selon l'une quelconque des revendications 1 à 5, **caractérisée en ce que** le corps en mousse (6) est associé à un espace de déviation (10).

7. Soupape selon l'une quelconque des revendications 1 à 6, **caractérisée en ce que** des particules ferromagnétiques sont réparties dans le corps en mousse (6).

8. Soupape selon la revendication 7, **caractérisée en ce que** les particules ferromagnétiques présentent un diamètre moyen de l'ordre de 0,1 µm à 1 mm.

9. Soupape selon la revendication 7 ou 8, **caractérisée en ce que** les particules représentent entre 5 et 50 pour cent en volume du corps en mousse (6).

10. Soupape selon l'une quelconque des revendications 1 à 9, **caractérisée en ce que** le corps d'étanchéité (3) est réalisé sous forme de corps en mousse cylindrique (6) dont l'extrémité (7) tournée vers le siège d'étanchéité (5) présente un joint d'étanchéité (12).

11. Soupape selon l'une quelconque des revendications 1 à 10, **caractérisée en ce que** le corps en mousse (6) présente des pores ayant un diamètre de l'ordre de 10 µm à 0,5 mm.

12. Soupape selon l'une quelconque des revendications 1 à 11, **caractérisée en ce que** le corps en mousse (6) présente une proportion de pores d'au moins 5 pour cent en volume.

13. Soupape selon l'une quelconque des revendications 1 à 12, **caractérisée en ce que** le dispositif (4) pour produire un champ magnétique comprend une bobine (13).

14. Soupape selon l'une quelconque des revendications 1 à 13, **caractérisée en ce que** le corps d'étanchéité (3) peut être déplacé dans le cas d'une densité de flux magnétique de 0,5 à 2 Tesla et effectue une course de levée (11).
